(19) Europäisches Patentamt
European Patent Office
Office européen des brevets

(11) **EP 0 759 573 A2**

(12) **EUROPEAN PATENT APPLICATION**

(43) Date of publication:
26.02.1997 Bulletin 1997/09

(51) Int. Cl.⁶: **G02B 27/46**

(21) Application number: 96202198.6

(22) Date of filing: 05.08.1996

(84) Designated Contracting States:
DE FR GB

(30) Priority: 17.08.1995 US 2392
10.05.1996 US 644756

(71) Applicant: **EASTMAN KODAK COMPANY**
Rochester, New York 14650-2201 (US)

(72) Inventors:
• **Revelli, Joseph F., Jr.,**
c/o Eastman Kodak Co.
Rochester, New York 14650-2201 (US)
• **Nutt, Alan C.G.,**
c/o Eastman Kodak Co.
Rochester, New York 14650-2201 (US)
• **Prince, Eric T.,**
c/o Eastman Kodak Co.
Rochester, New York 14650-2201 (US)
• **Gasper, John,**
c/o Eastman Kodak Co.
Rochester, New York 14650-2201 (US)
• **Wilson, Sharlene A.,**
c/o Eastman Kodak Co.
Rochester, New York 14650-2201 (US)
• **Jackson, Todd A.,**
c/o Eastman Kodak Co.
Rochester, New York 14650-2201 (US)

(74) Representative: **Wagner, Karl H., Dipl.-Ing. et al**
**WAGNER & GEYER**
Patentanwälte
Gewürzmühlstrasse 5
80538 München (DE)

(54) **Wavelength-selective phase-type optical low-antialiasing filter and fabrication methods**

(57) A wavelength-selective optical low-pass filter for use with an optical imaging system of a solid-state color imager, comprising a transparent substrate and a plurality of transparent spots randomly placed on the substrate for producing a phase difference between a wavefront transmitted through the spots and that portion of the substrate other than the spots to define a filter having a spatial sampling cut-off frequency which varies depending on wavelength of light, the phase difference satisfying the following conditions

$$\cos\phi_\alpha = 1$$

$$-1.0 \leq \cos\phi_\beta \leq -0.4$$

$$-1.0 \leq \cos\phi_\gamma \leq -0.4$$

where $\phi_\alpha$, $\phi_\beta$, and $\phi_\gamma$ are the phase differences due to the spots at certain specific wavelengths in the visible through infrared portion of the optical spectrum, and are given by the following relationship

$$\phi_j = 2\pi \frac{n_j - n_i'}{\lambda_j} t$$

where i = $\alpha$, $\beta$, or $\gamma$; $n_j$ is the index of refraction of the material comprising the spots at the specific wavelength $\lambda_j$; $n_i'$ is the index of refraction of the medium surrounding the spots at the specific wavelength $\lambda_j$; and $t$ is the physical thickness of the spots.

FIG. 4

## Description

### Field of the Invention

The present invention relates to an optical low-pass filter to reduce or eliminate high spatial frequencies for selected wavelength bands while passing high spatial frequencies in other wavelength bands in order to minimize aliasing artifacts due to discrete sampling of images in image capture devices such as electronic still cameras with color separation filters or single sensor element color video cameras while at the same time maintaining high resolution.

### Background of the Invention

Solid-state image capture devices such as electronic still cameras and the like rely on an array of discrete light sensitive elements known as photosites to spatially sample an image of the object and produce sampled output. Because the image is sampled in a discrete manner, images recreated contain false signal content not present in the original object. This phenomenon is known as aliasing or moiré patterning and is most pronounced for those spatial frequency components of the image which are equal to or greater than half the spatial sampling frequency of the photosite array, the so-called Nyquist frequency. In order to avoid aliasing, then, it is necessary to employ an optical low-pass filter in the optical system to eliminate those spatial frequencies in the image of the object which exceed the Nyquist frequency.

In many color electronic image capture devices, the situation is further complicated by the fact that light incident on individual photosites is filtered by a primary color filter. Typically three filters of different color, *e.g.*, red, green, or blue, are placed over individual photosites in order to sample the image of the object separately in each of the three wavelength bands. In recent years, in the case of red, green, and blue filters, particular attention has been paid to the fact the sampling frequency in the green wavelength band should be greater than the sampling frequencies in either the red or blue bands due to the fact that the human eye is most sensitive to details in the green region of the visible spectrum. For sensors designed in accord with this approach, the Nyquist frequency associated with photosites having red or blue color filters is generally less than that of those photosites associated with the green filter. Consequently, it would be desirable to design a low-pass optical filter which selectively eliminates spatial frequency components above the red or blue Nyquist frequency for the image sampled with photosites associated with the red or blue color filters while passing those same spatial frequency components for the image sampled with the portion of the photosite array associated with the green filter. Applications using a similar three color sampling scheme with color filters over photosites other than red, green, and blue may also benefit from a design of this type. Color imaging in the infrared portion of the optical spectrum is one potential example where three infrared wavelengths may be sampled in lieu of red, green, and blue and converted into visual wavelengths, e.g. red, green, blue, for display.

Phase-type blur filters have been disclosed previously in U.S. Patents 2,959,105 and 4,480,896 for use as color-selective low-pass optical photographic filters. When combined with ordinary sharp photographic lenses these filters produce a blurring or soft focus effect selectively in the green portion of the visible spectrum where the human eye is most sensitive without any light loss. This feature is particularly desirable in portrait photography.

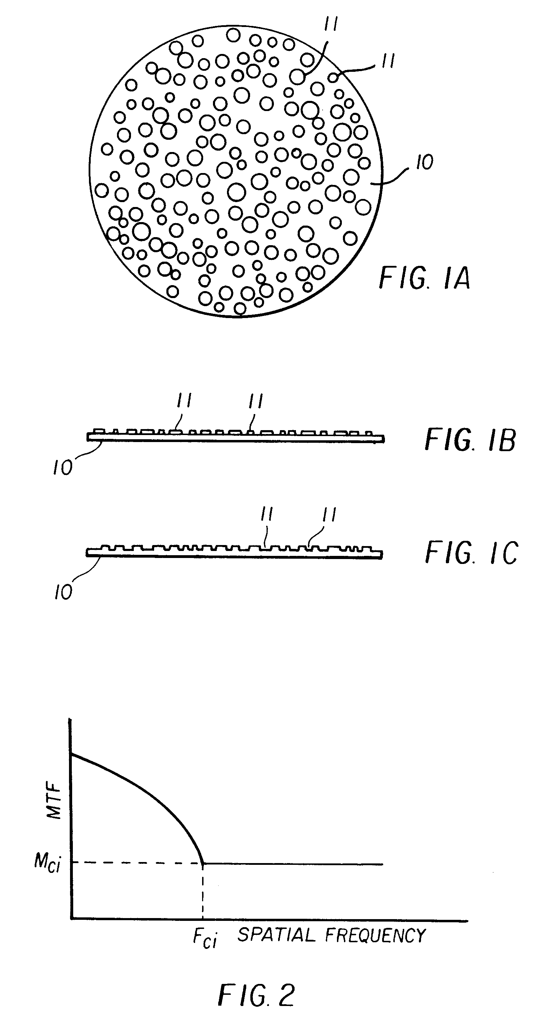

Reference is also made to articles entitled "Optical Noise Filter" by K. Sayanagi, *Journal of Applied Physics (Japan)*, 26, No. 10, 1958, pp 623-632; and "Optical Phase-Noise Filter for Color Portrait Photography" by Y. Okano, *Proceedings of the International Commission for Optics, 13th Conference Digest - Sapporo, Japan,* 1984, pp 104-105. These articles describe phase-type optical low-pass filters formed by a transparent substrate 10 with a plurality of randomly positioned and mutually spaced transparent spots 11 each spot being of a thickness on the order of the wavelength of light passing through the filter as shown in FIG. 1A. FIGS. 1B and 1C show side views of the phase-type optical low-pass filters for cases where the randomly placed transparent spots are formed by projections from the surface of the transparent substrate (FIG. 1B) and alternatively by depressions in the surface of the transparent substrate (FIG. 1C).

When positioned between the objective lens and the image plane of the imaging system, the phase-type low-pass optical filter aberrates the wavefront of the light passing through it in such a way that the modulation transfer function (hereinafter referred to as "MTF") of the combined lens-filter system exhibits a well-defined cut-off for spatial frequencies above $F_c$ as shown in FIG. 2. Note in FIG. 2 that the effects of a finite aperture have been ignored. The value of the MTF, $M_{ci}$, at the cut-off spatial frequency, $F_{ci}$, for a given wavelength, $\lambda_i$, assuming that the total area of the spots is equal to the total area of the filter portion other than the spots is given by

$$M_{ci} = \frac{1}{2}[1 + \cos\phi_i] \qquad (1)$$

wherein

$$\phi_i = 2\pi q_i t \equiv 2\pi \frac{n_i - n_i{}'}{\lambda_i} t \qquad (2)$$

is the phase difference at wavelength, $\lambda_i$, of the portion of a wavefront passing through a spot relative to that portion of the wavefront passing through a region where there is no spot; and

$t$ = physical thickness (i.e., height or depth) of the spot;
$n_i$ = index of refraction of the spot at wavelength $\lambda_i$;
$n_i'$ = index of refraction of the medium surrounding the spot at wavelength $\lambda_i$ and
$i = R, G,$ or $B$ for wavelengths in the red, green, or blue portions of the visible spectrum, respectively.

The quantity $q_i$, which is defined by equation (2') as

$$q_i \equiv \frac{[(n_i - n_i')t]}{\lambda_i t} \qquad (2')$$

is the difference in the optical thicknesses of the spot and the medium surrounding the spot divided by the product of the wavelength and the physical thickness of the spot.

The cut-off spatial frequency is given by

$$F_{ci} = \frac{a}{b\lambda_i} \qquad (3)$$

wherein

$\alpha$ = mean diameter of the spots; and
$b$ = distance between the filter and the image plane.

The phase-type low-pass optical filter may also be placed in the entrance pupil of the objective lens in which case $b = f$ , where $f$ is the focal length of said objective lens.

If the thickness of the spot is chosen to be such that the optical path difference, or OPD, is equal to a half wavelength or an odd integer number of half wavelengths of green light, that is if

$$OPD_G \equiv (n_G - n_G')t = (2m_G + 1)\frac{\lambda_G}{2}, \qquad (4)$$

where $m_G$ is an integer number, then the phase shift $\phi_G$, according to Eq. (2) becomes equal to an odd integer multiple of $\pi$ and $M_{cG}$ becomes zero, according to Eq. (1). Furthermore, if the thickness of the spots, $t$, is chosen so that Eq. (4) is true, then the $M_{cR}$ and $M_{cB}$ the MTF's at cut-off for the red and blue wavelength bands, respectively, in general will not be zero according to Eqs. (1) and (2). In other words, the effect of the low-pass optical filter in the imaging system is to cause the contrast to become zero for high spatial frequency components of the image filtered through a green color filter while at the same time preserving, at least to a certain degree, the high spatial frequency components in the red and blue images.

This is exactly opposite of what is required of a spectrally selective low-pass filter to be used with a solid-state imaging device where it is desirable to pass high spatial frequencies in the green wavelength bands while rejecting those in the red and blue bands. Alternatively, U.S. Patents 3,911,479; 4,009,939; and more recently 5,280,388 disclose the use of phase gratings in order to achieve wavelength selective optical low-pass filtering wherein the high spatial frequencies in the red and blue wavelength bands are suppressed while the high spatial frequencies in the green wavelength band are passed.

U.S. Patent 3,911,479 addresses moiré effects in single tube color TV cameras due to interference between the luminance signals (primarily green information) and chrominance signals (primarily red and blue information). The primary object of the invention in this patent is a low-pass optical filter which obtains a reduction in the high spatial frequency components that contribute to the chrominance signal while allowing high spatial frequency components that contribute to the luminance signal to pass. The optical low-pass filter is comprised of parallel transparent stripes or laminae with random widths, random spacing or pitches, and multiple thicknesses formed on a transparent substrate. The thickness of the stripes are chosen such that the OPD of light passing through a stripe at normal incidence to the substrate is an integer multiple of a specific wavelength, $\lambda_G$, in the green (i.e., $OPD_G = 0\lambda_G$, $N\lambda_G$, 2 $N\lambda_G$, ..., $(m_G-1) N\lambda_G$ where $N$ and $m_G$ are positive integers). The invention described in this patent suffers from several disadvantages. First the stripes are effective in reducing spurious moiré patterns in one dimension only. Although this filter is appropriate for TV vidicons where the electron beam is scanned in one direction, it is not appropriate for the two-dimensional photosite arrays found in solid-state imagers. A second difficulty is that this blur filter would be difficult to fabricate given the precision required for the multiple thicknesses of the stripes. This invention suffers from the disadvantage that the stripes must be properly oriented with respect to the scan direction (in the case of the TV vidicon) or photosite array (in the case of the solid-state imager).

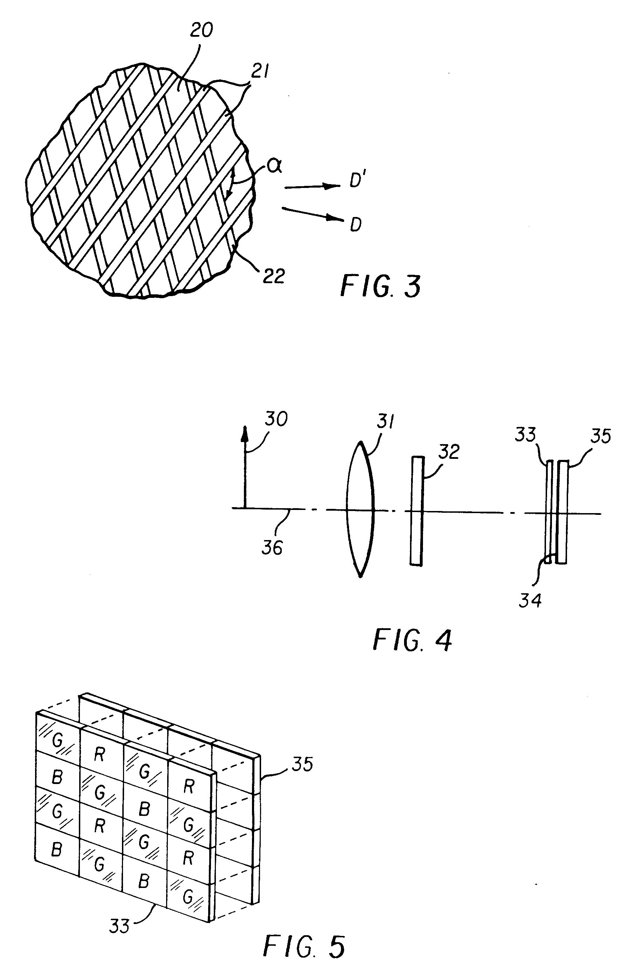

U.S. Patent 4,009,939 also relates to a wavelength selective low-pass optical filter that is used in color television camera systems to eliminate or reduce moire effects due to interference between the luminance and chrominance signals without sacrificing image resolution. As shown in FIG. 3, the filter is comprised of a first transparent phase grating 21, a second transparent phase grating 22, and a transparent substrate 20 supporting said first and second phase gratings. Each phase grating is formed by a plurality of parallel transparent stripes or laminae such that the laminae of the respective first and second gratings are non parallel to each other crossing at an angle $\alpha$ as shown in FIG. 3. The thickness of the laminae in the first phase grating, $t_1$, and the second phase grating, $t_2$, are selected independently and in such a way that the first phase grating attenuates high spatial frequencies in the red spectrum and the second phase grating attenuates high spatial frequencies in the blue spectrum. Accordingly, the phase retardation of the laminae in the first grating, $\phi_1$, and the second grating, $\phi_2$, are such that the MTF of the optical imaging system which includes such a low-pass optical filter is zero or sufficiently close to zero for the respective design wavelengths. Thus the absolute value of $M_{cR}$ will be less than 0.3 providing

$$1 - 0.65\frac{X_1}{a_1} \leq \cos\phi_1 \leq 1 - 0.35\frac{X_1}{a_1} \qquad (5)$$

and the absolute value of $M_{cB}$ will be less than 0.3 providing

$$1 - 0.65\frac{X_2}{a_2} \leq \cos\phi_2 \leq 1 - 0.35\frac{X_2}{a_2} \qquad (6)$$

wherein for both gratings respectively, $X_1$ and $X_2$ are the grating pitches; $a_1$ and $a_2$ are the laminae widths;

$$\phi_1 = \frac{2\pi}{\lambda_R}(n_1 - n')t_1 \qquad (7)$$

and

$$\phi_2 = \frac{2\pi}{\lambda_B}(n_2 - n')t_2 \qquad (8)$$

$n_1$ and $n_2$ are the indexes of refraction of the laminae; $\lambda_R$ and $\lambda_B$ are the design wavelengths for the red and blue spectral bands, respectively; and $n'$ is the index of refraction of the medium surrounding the stripes. In other words, the thicknesses of the laminae of the first and second gratings are chosen to cause the MTF associated with each grating individually to cut-off high spatial frequency components in the red and blue images, respectively. The high spatial frequencies in the green image are more or less unaffected by the filter. The invention in this patent suffers from disadvantages similar to those already mentioned with respect to U.S. Patent 3,911,479; namely, the low-pass filter reduces aliasing effects only along a particular direction in the image plane (indicated by direction D in FIG. 3) whereas an electronic image pick-up device requires that aliasing be removed in two-dimensions. Furthermore, this filter would be difficult to manufacture in that two gratings each with its own precise laminae thickness must be formed and aligned with respect to one another. The axis of the low-pass filter according to this invention along which anti-aliasing is achieved (i.e., direction D in FIG. 3) must be aligned properly with respect to the imager axis (i.e., television tube scan direction or solid-state imager photosite array direction) which means that more complexity (i.e., cost) is added to the manufacture process.

U.S. Patent 5,280,388 discloses a wavelength selective phase grating optical low-pass filter that is specifically designed as an anti-aliasing optical filter for color solid-state imagers having two dimensional photosite arrays. Wavelength selectivity is accomplished by appropriately choosing the refractive indexes and the refractive index dispersions of the transparent medium that forms the phase grating and the transparent medium that surrounds the phase grating such that these refractive indexes are matched for wavelengths in the green spectral band and mismatched in the red and blue spectral bands. That is to say

$$n_G = n'_G \qquad (9)$$

and

$$vd < vd' \text{ or } vd > vd' \qquad (10)$$

where $n_G$ and $n'_G$ are the indexes of refraction of the grating and of the medium that surrounds the grating, respectively, in the spectral band centered about the green wavelength, $\lambda_G$, and $vd$ and $vd'$ are the Abbe's numbers of the grating and of the medium that surrounds the grating, respectively. The thickness of the stripes that form the phase grating is chosen so that the MTF of the optical system is zero or near zero for red and blue images and non-zero for the green image. Although this patent specifies that two dimensional moiré effects such as those encountered in solid-state imagers can be eliminated or reduced by introducing a second grating which is oriented in a direction perpendicular to the first grating, unfortunately this low-pass filter has the disadvantage that it must still be aligned precisely with respect to the axes of the photosite array of the solid-state imager in order to be effective. This invention has the further disadvantage that special conditions are placed on the physical properties (i.e., index of refraction and dispersion) of the materials used to fabricate the low-pass filter. These properties are restrictive and may result in conflicts with other requirements such as inexpensive construction costs. The need to form two separate gratings oriented perpendicularly to one another also complicates the fabrication and adds to the expense of fabricating this device. It is possible that the regular rectilinear grating pattern of this low-pass optical filter will result in the appearance of artifacts in the image plane especially when the filter is placed between the imaging lens and the image plane.

Summary of the Invention

The present invention is directed to overcoming one or more of the problems set forth above. The present invention is briefly summarized, according to one aspect, as a wavelength-selective optical low-pass filter for use with an optical imaging system of a solid-state color imager, comprising a transparent substrate and a plurality of transparent spots randomly placed on the substrate for producing a phase difference between a wavefront transmitted through the spots and that portion of the substrate other than the spots to define a filter having a spatial sampling cut-off frequency which varies depending on wavelength of light, the phase difference satisfying the following conditions

$$\cos\phi_\alpha = 1$$

$$-1.0 \leq \cos\phi_\beta \leq -0.4$$

$$-1.0 \leq \cos\phi_\gamma \leq -0.4$$

where $\phi_\alpha$, $\phi_\beta$, and $\phi_\gamma$ are the phase differences due to the spots at certain specific wavelengths in the visible through infrared portion of the optical spectrum, and are given by the following relationship

$$\phi_i = 2\pi \frac{n_i - n_i{'}}{\lambda_i} t$$

where $i = \alpha$, $\beta$, or $\gamma$; $n_i$ is the index of refraction of the material comprising the spots at the specific wavelength $\lambda_i$; $n_i{'}$ is the index of refraction of the medium surrounding the spots at the specific wavelength $\lambda_i$; and $t$ is the physical thickness of the spots.

It is therefore an object of the present invention to provide an optical low-pass filter which has wavelength selectivity, i.e., which has a different cut-off spatial frequency for different wavelength bands, which also eliminates the above noted difficulties.

This object is achieved by an optical low-pass filter comprising a transparent substrate and a plurality of transparent spots randomly placed on said substrate for producing a phase difference between a wavefront transmitted through said spots and that portion of the substrate other than said spots to define a filter having a spatial sampling cut-off frequency which varies depending on wavelength of light, said phase difference satisfying the following conditions

$$\cos\phi_\alpha = 1$$

$$-1.0 \leq \cos\phi_\beta \leq -0.4$$

$$-1.0 \leq \cos\phi_\gamma \leq -0.4$$

where $\phi_\alpha$, $\phi_\beta$, and $\phi_\gamma$ are the phase differences at certain specific wavelengths in the visible through infrared portion of the optical spectrum, and are given by the following relationship

$$\phi_i = 2\pi \frac{n_i - n_i{'}}{\lambda_i} t$$

where $i = \alpha$, $\beta$, or $\gamma$; $n_i$ is the index of refraction at the specific wavelength $\lambda_i$; $n_i{'}$ is the index of refraction at the specific wavelength $\lambda_i$ of the medium surrounding the spot; and $t$ is the thickness of the spot.

In accordance with the present invention, an inexpensive low-pass optical filter can be constructed which is suitable for use in imaging systems of solid-state cameras. Moreover, the present invention functions as a spectrally selective low-pass filter in that high spatial frequencies in the bandwidths corresponding to $\beta$ and $\gamma$ are attenuated while high spatial frequencies in the bandwidth corresponding to $\alpha$ are not.

Advantageous Effect of the Invention

The present invention has the following advantages.

The low-pass filter according to the present invention is designed specifically to eliminate color aliasing while preserving high resolution in solid state imagers. For this application in the visible portion of the optical spectrum it is necessary that red and blue high spatial frequencies are attenuated while green high spatial frequencies are transmitted. Alternatively, U.S. Patents 2,959,105 and 4,480,896 describe low-pass filters which are intended for use in photographic systems and are designed to do just the opposite; that is, these filters are designed to attenuate the green high spatial frequencies while transmitting the red and blue high spatial frequencies. Consequently the inventions of these two prior art patents are not suited for use in solid state imagers.

The present invention also avoids difficulties associated with U.S. Patents 3,911,479; 4,009,939; and 5,280,388. The low-pass filter described in the present invention is formed by a plurality of randomly positioned spots of random diameter. Accordingly, it is rotationally symmetric and is effective in eliminating or reducing aliasing in two dimensions regardless of the filter orientation with respect to the electronic imager. This is in contrast to the aforementioned prior art patents which can perform low-pass filtering only along one axis and/or depend on precise alignment of the filter with the axes of the electronic imager photosite array.

Yet another advantage is the ease of fabrication of the low-pass filter of the present invention. The random spot pattern can be easily manufactured in several different ways. For example, the spot pattern can be formed in a master mold and the mold used to cast or stamp replicate plastic low-pass filters. Another method of producing the low-pass filter according to the present invention is to spin-coat photoresist on a glass substrate (quartz, for example) and photolithographically pattern the photoresist according to the pattern of the random spots. The glass substrate is then placed in a buffered oxide etch solution which transfers the spot pattern in the photoresist to the substrate followed by the removal of the photoresist. Yet another method is to deposit a thin layer of a transparent organic polymer such as PMMA onto the transparent substrate followed by evaporation of a thin inorganic etch-stop layer such as silicon dioxide. After patterning the etch-stop layer with the spot pattern using standard photolithographic processing techniques, the etch-stop pattern is transferred to the polymer using an oxygen plasma reactive ion etching technique. It will be furthermore appreciated that it is necessary to form the random spot pattern on a single surface of the transparent substrate. This is in contrast to U.S. Patents 3,911,479; 4,009,939; and 5,280,388 which require the formation of two separate phase gratings on two opposing surfaces of the same substrate or on two different surfaces of different substrates. Furthermore, the invention does not depend on materials with unique optical properties such as mentioned in the claims of prior art U.S. Patent 5,280,388.

It should be noted that low-pass optical filters with regular or periodic phase gratings such as those mentioned in U.S. Patents 4,009,939 and 5,280,388 exhibit an additional drawback. A spurious pattern may be produced in the image plane which is an artifact of the interference generated by light transmitted through said regular gratings. This artifact is especially pronounced in cases where bright points of light are to be imaged. The low-pass filter according to the present invention, alternatively, avoids this difficulty in that it is comprised of a random array of randomly sized spots whose interference pattern in the image plane is a nearly constant intensity halo about the bright object.

The above and other objects of the present invention will become more apparent when taken in conjunction with the following description and drawings wherein identical reference numerals have been used, where possible, to designate identical elements that are common to the FIGS.

Brief Description of the Drawings

FIGS. 1A, 1B and 1C show front and side views of a phase-type optical low-pass filter;

FIG. 2 shows a graph of the Modulation Transfer Function (MTF) as a function of spatial frequency for an optical system containing a phase-type optical low-pass antialiasing filter;

FIG. 3 shows a prior art wavelength-sensitive optical low-pass filter;

FIG. 4 shows a schematic view of a case where a wavelength-sensitive phase-type low-pass optical filter of this invention is used in an optical system containing a solid-state imager using a color filter array;

FIG. 5 shows a schematic view of a color filter array aligned to a solid-state imager photosite array in which the spatial sampling frequency for photosites with green filters is greater than the spatial sampling frequency for photosites with red or blue filters;

FIG. 6 shows a graph of the variations of MTF value at the bending point in the modulation transfer function as a function of transparent spot thickness for red ($\lambda_R$ = 0.640 microns), green ($\lambda_G$ = 0.540 microns), and blue ($\lambda_B$ = 0.470 microns) light when $Ta_2O_5$ is used as the spot material;

FIG. 7 shows a graph of the variations of MTF value at the bending point in the modulation transfer function as a function of transparent spot thickness for red ($\lambda_R$ = 0.640 microns), green ($\lambda_G$ = 0.540 microns), and blue ($\lambda_B$ = 0.470 microns) light when $SiO_2$ is used as the spot material;

FIG. 8 shows a graph of the variations of MTF value at the bending point in the modulation transfer function as a function of transparent spot thickness for red ($\lambda_R$ = 0.640 microns), green ($\lambda_G$ = 0.540 microns), and blue ($\lambda_B$ = 0.470 microns) light when PMMA is used as the spot material;

FIG. 9 shows a series of steps (A-D) depicting a means of forming a wavelength-sensitive phase-type optical low-pass antialiasing filter in accordance with the present invention;

FIG. 10 shows a series of steps (A-C) depicting another means of forming a wavelength-sensitive phase-type optical low-pass antialiasing filter in accordance with the present invention;

FIG. 11 shows a series of steps (A-E) depicting yet another means of forming a wavelength-sensitive phase-type optical low-pass antialiasing filter in accordance with the present invention;

FIG. 12 shows a series of steps (A-D) depicting yet another means of forming a wavelength-sensitive phase-type optical low-pass antialiasing filter in accordance with the present invention; and

FIG. 13 shows a series of steps (A-D) depicting yet another means of forming a wavelength-sensitive phase-type optical low-pass antialiasing filter in accordance with the present invention.

Detailed Description of the Invention

FIG. 4 is a conceptual view of an optical imaging system for a solid state image pick-up device which incorporates a wavelength selective phase-type optical low-pass antialiasing filter. In this figure, reference numeral 30 denotes an object to be imaged; element 31 is a lens system constituted by at least one lens; element 32 is the wavelength selective phase-type optical low-pass antialiasing filter of this invention; element 33 is a two-dimensional color filter array which is aligned with element 35, the two-dimensional light-sensing photosite array which constitutes the solid-state image pickup device; and element 36 is an optical axis. Element 34 is the image plane of the optical system which is coincident with the surface of the solid-state image pickup device which faces the object and $b$ is a distance from the wavelength selective phase-type optical low-pass antialiasing filter 32 to the image plane 34. As shown in FIG. 4, an optical low-pass effect which is different depending on the wavelength is obtained by disposing the wavelength selective phase-type optical low-pass antialiasing filter 32 between the object 30 and the image plane 34. However, the position of the optical low-pass filter is not limited to the position shown in FIG. 4, but may be between the object 30 and the lens system 31, or between the groups of lenses in the lens system or deposited directly on or molded into one surface of one lens of the lens system 31.

One method of constructing a color solid-state image pickup device is to form a two-dimensional mosaic of primary color filters and to position said two-dimensional color filter array (CFA) 33 in proximity to and alignment with the two-dimensional array of light-sensing photosite elements which constitutes the solid-state image pickup device 35 such that light which is received by each individual light-sensing photosite element has been transmitted through one and only one color filter of the CFA as shown in FIG. 5. In the visible portion of the optical spectrum the human eye is more sensitive to details in the green wavelength band, it is desirable that the two-dimensional color filter array contain a greater number of more closely spaced green filters than either red or blue filters. This is shown schematically in FIG. 5.

As mentioned previously, aliasing effects arise when the spatial frequency components in the image are greater than or equal to the Nyquist frequency of the solid-state imager photosite array. In color solid-state image pickup devices containing CFA's with more closely spaced green filter elements than either red or blue filter elements, those photosites with green filters will have a greater Nyquist frequency than those photosites with either red or blue filters, that is

$$F_{NG} > F_{NR} \text{ and } F_{NG} > F_{NB} \qquad (11)$$

wherein

$$F_{Ni} = \frac{1}{2T_i} \qquad (12)$$

are the Nyquist frequencies and $T_i$ are the spacing between photosites with the same color filter (i.e., $i=R$, $G$, or $B$ corresponding to red, green, or blue filters, respectively). Accordingly, it is desirable to design the wavelength-selective low-pass optical filter in such a way that the spatial frequency components in the red and blue images which are at or above $F_{NR}$ and $F_{NB}$, respectively, are cut-off without affecting the spatial frequency components in the green image between $F_{NR}$ or $F_{NB}$ and $F_{NG}$. In order to accomplish this design objective, it is necessary to select the proper geometrical spot thickness, $t$, and the proper mean spot diameter, $a$.

Determination of Proper Spot Thickness

Previously cited references by Sayanagi and Okano teach that the MTF of optical imaging systems which include a low-pass optical filter comprising a transparent substrate 10 upon which are disposed at random a plurality of transparent spots 11 with random diameters, such as depicted in FIG. 1, exhibits a well-defined bending point or cut-off at spatial frequency, $F_{ci}$, for a given wavelength, $\lambda_i$. The value of the MTF at the cut-off spatial frequency is $M_{ci}$ as shown in FIG. 2. In order to filter spatial frequencies above the Nyquist frequency for the red and the blue images without affecting the resolution in the green image, it is necessary that $M_{cG}$ be unity, and that $M_{cR}$ and $M_{cB}$ be as close to zero as possible. According to Eq. (1), these conditions are met providing that

$$q_G t = m_G \qquad (13)$$

$$q_B t \approx m_B \pm \frac{1}{2} \qquad (14)$$

$$q_R t \approx m_R \pm \frac{1}{2} \qquad (15)$$

where $m_i$ are three integers and $q_i$ are as defined in **Eq. (2')**. The "approximately equal to" sign, $\approx$, is used in Eqs. (14) and (15) to reflect the fact that no set of integers, $m_i$, can be found which will in general satisfy Eqs. (13), (14), and (15) simultaneously. If all three integers are taken to be the same, that is if $m_R = m_G = m_B = m$, Eqs. (13), (14), and (15) become

$$q_G t = m_G \qquad (13')$$

$$q_B t \approx m_B \pm \frac{1}{2} \qquad (14')$$

$$q_R t \approx m_R \pm \frac{1}{2} \qquad (15')$$

Solving Eqs. (13') and (14') simultaneously yields

$$m_1 = \text{Int}\{|x_1|\} \equiv \text{Int}\left\{\left|\frac{q_G}{2[q_B - q_G]}\right|\right\} \qquad (16)$$

while solving Eqs. (13') and (15') yields

$$m_2 = \text{Int}\{|x_2|\} \equiv \text{Int}\left\{\left|\frac{q_G}{2[q_G - q_R]}\right|\right\} \qquad (17)$$

where $m_1$ and $m_2$ are both greater than zero and the function Int{} is defined such that the argument of the function is rounded off to the nearest integer. Eqs. (16) and (17) will in general provide two different values for the integer $m$. Substitution of either integer value $m_1$ or $m_2$ into Eq. (13') yields a value for $t$, the spot thickness, which will cause $M_{cG}$ to equal one according to Eq. (1). Alternatively, regardless of which value $m_1$, or $m_2$ is

selected, neither $M_{cR}$ nor $M_{cB}$ will precisely equal to zero in general. The higher spatial frequency components in the red and blue images can be considered sufficiently suppressed providing that the conditions

$$0 \le M_{cR} \le +0.3 \qquad (18)$$

and

$$0 \le M_{cB} \le +0.3 \qquad (19)$$

as constrained by Eq. (1) are maintained. Substituting $M_{cG} = 1$ and the conditions in Eqs. (18) and (19) into Eq. (1) yield, respectively, the equivalent conditions

$$\cos\phi_G = 1 \qquad (20)$$

$$-1.0 \le \cos\phi_R \le -0.4 \qquad (21)$$

$$-1.0 \le \cos\phi_B \le -0.4 \qquad (22)$$

where $\phi_G$, $\phi_R$, and $\phi_B$ are the phase differences due to the spots at certain specific wavelengths in the green, red, and blue regions of the visible spectrum, respectively as given in Eq. (2). It is usually better to choose the value $m_1$ over $m_2$ since the $M_{cB}$ is more sensitive to variations in thickness and wavelength than is $M_{cR}$.

Determination of Proper Mean Spot Diameter

Eq. (3) specifies the relationship between the mean desired cut-off spatial frequency and the mean spot diameter. From the preceding considerations, it is can be seen to be desirable to select the cut-off spatial frequency such that spatial frequency components at and above the Nyquist frequency in both the red and the blue images are suppressed. Solving Eq. (3) for the mean spot diameter yields the expression

$$a = F_{Ni}\lambda_i b \qquad (23)$$

where $F_{ci}$, the desired spatial cut-off frequency at a specified wavelength $\lambda_i$, has been replaced by the Nyquist frequency $F_{Ni}$ at said specified wavelength.

In most solid-state color imagers operating in the visible portion of the optical spectrum, the spacing of photosites with red filters, $T_R$, is the same as that of the photosites with blue filters, $T_B$. According to Eq. (12) this implies that the Nyquist frequency for the red and blue photosites are equal; that is, $F_{NR} = F_{NB}$. Under this condition, it is seen from Eq. (23) that the required mean spot diameter is directly proportional to the specified wavelength $\lambda_i$; a smaller specified wavelength implies a smaller mean spot diameter. Alternatively, according to Eq. (3) a lower cut-off spatial frequency is obtained with a smaller spot diameter. Since it is generally desirable to choose the lowest possible cut-off frequency in order to insure that undesirable spatial frequency components in both the red and blue images are suppressed, it is usually preferable to select the mean spot diameter that is determined from Eq. (23) with $\lambda_i$ taken to be equal to $\lambda_B$, the smallest wavelength

$$a = \frac{\lambda_B b}{2T_B} \qquad (24)$$

where Eq. (12) has been substituted into Eq. (23) and it is has been assumed that $F_{NR} = F_{NB}$ so that $T_R = T_B$.

It should be apparent to one skilled in the art that although it has been assumed that the transparent spots are circular in shape, for spots which are oriented randomly there is no need to place a restriction on the spot shape. It should also be apparent that the blur filter according to the present invention can be placed anywhere between the lens system and the image plane; however, the optical low-pass filter may also be placed between the object to be imaged and the lens system, in the entrance pupil of the lens system, or between the lenses in the lens system. In the these cases, the distance $b$ in Eq. (24) is taken to be equal to the focal length of the lens system, $f$.

Examples

In order to illustrate the above process of designing a wavelength selective optical low-pass filter three different materials are considered for the transparent spots. Tables I, II and III give the indexes of refraction and values of $q_i$ (as defined in Eq. (2')) for the selected wavelengths $\lambda_R = 0.640$ microns, $\lambda_G = 0.540$ microns, and $\lambda_B = 0.470$ microns for $Ta_2O_5$, $SiO_2$, and polymethylmethacrylate (PMMA), respectively. In these tables it is assumed that $n_R' = n_G' = n_B' = 1.0$.

Table I

| $Ta_2O_5$ | | |
|---|---|---|
| $\lambda_i$ ($\mu$m) | $n_i$ | $q_i$ ($\mu$m$^{-1}$) |
| 0.640 | 2.1100 | 1.7343 |
| 0.540 | 2.1398 | 2.1108 |
| 0.470 | 2.1730 | 2.4958 |

Table II

| $SiO_2$ | | |
|---|---|---|
| $\lambda_i$ ($\mu$m) | $n_i$ | $q_i$ ($\mu$m$^{-1}$) |
| 0.640 | 1.4567 | 0.7136 |
| 0.540 | 1.4602 | 0.8522 |
| 0.470 | 1.4641 | 0.9874 |

Table III

| PMMA | | |
|---|---|---|
| $\lambda_i$ ($\mu$m) | $n_i$ | $q_i$ ($\mu$m$^{-1}$) |
| 0.640 | 1.4898 | 0.7653 |
| 0.540 | 1.4940 | 0.9148 |
| 0.470 | 1.4992 | 1.0621 |

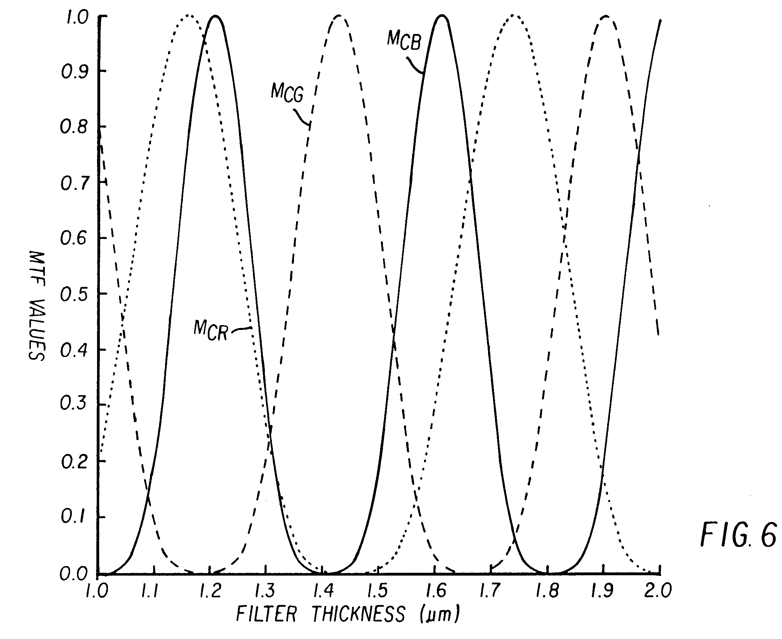

Taking values of $q_i$ for Ta$_2$O$_5$ from Table I and substituting them into Eqs. (16) and (17) yield $x_1$ = 2.74 and $x_2$ = 2.80, respectively, which implies $m_1$ = $m_2$ = 3. Substituting this value of $m$ into Eq. (13') yields the value $t$ = 1.4213 microns for the thickness of the transparent spot. The values $\cos\phi_R$ = -0.976, $\cos\phi_G$ = 1.000, and $\cos\phi_B$ = -0.956 are obtained from Eq. (2) which, according to Eq. (1), correspond to the values $M_{cR}$ = 0.012, $M_{cG}$ = 1.000, and $M_{cB}$ = 0.022, respectively. Hence the conditions given in Eqs. (18) through (22) are satisfied. FIG. 6 shows plots of the MTF values $M_{cR}$, $M_{cG}$, and $M_{cB}$ as functions of the filter thickness $t$ according to Eq. (1). Note that for $t \approx 1.42$ microns, $M_{cG}$ has a peak value of one whereas the curves for the red and the blue photosites are near zero. Also note that the MTF values vary rapidly with filter thickness when Ta$_2$O$_5$ is used as the transparent spot material. This arises from the fact that the index of refraction of Ta$_2$O$_5$ is rather large (see Table I).

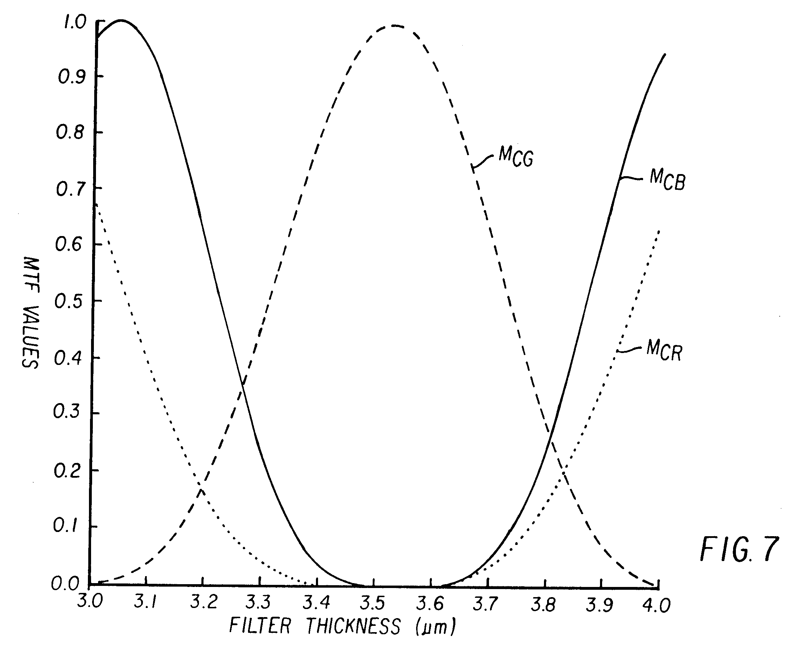

For SiO$_2$, values $x_1$ = 3.15 $x_2$ = 3.08 are obtained from Eqs. (16) and (17) and Table II which in turn yield $m_1$ = $m_2$ = 3. This value of $m$ yields $t$ = 3.520 microns according to Eq. (13') and $\cos\phi_R$ = -0.997, $\cos\phi_G$ = 1.000, and $\cos\phi_B$ = -0.988 are obtained from Eq. (2). These values, according to Eq. (1), correspond to the $M_{cR}$ = 0.0015, $M_{cG}$ = 1.000, and $M_{cB}$ = 0.006, respectively, which satisfy the conditions given in Eqs. (18) through (22). Note that the values of MTF at cut-off for the red and blue photosites are closer to zero than are the corresponding values obtained for Ta$_2$O$_5$. FIG. 7 shows plots of the MTF values $M_{cR}$, $M_{cG}$, and $M_{cB}$ as functions of the filter thickness $t$ according to Eq. (1). In the case of SiO$_2$, the value of $M_{cG}$ has a peak value of one for $t$ near 3.52 microns whereas the curves for the red and the blue photosites are near zero at this value of $t$. It can be seen from FIG. 7 that the MTF values vary much more slowly with the transparent spot thickness $t$ than was seen in the plots for Ta$_2$O$_5$ given in FIG. 6. This feature stems from the fact that the index of refraction of SiO$_2$ is much smaller than that of Ta$_2$O$_5$. The tolerance for manufacture is consequently much relaxed when SiO$_2$ is chosen as the material for the transparent spot making it a more desirable candidate material. Note also in FIG. 7 that the width of the valley near $t$ = 3.52 microns is broader for $M_{cR}$ than it is for $M_{cB}$. This feature is present in general; that is, it is independent of the particular material parameters chosen. The relative sensitivity of the MTF to changes in spot thickness for the blue photosites compared to the red photosites is the primary reason for selecting $m_1$ over $m_2$ in calculating the spot thickness in Eq. (13').

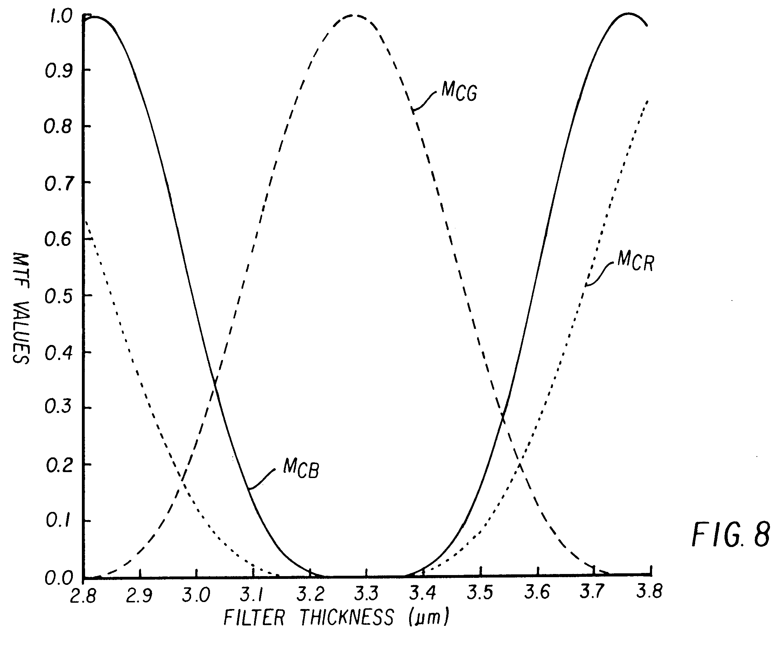

The values $x_1$ = 3.105, $x_2$ = 3.060, and $m_1$ = $m_2$ = 3 are obtained from Eqs. (16) and (17) and Table III for PMMA. These are similar to the corresponding values obtained for SiO$_2$ which arises from the similarity in the indexes of refraction of these two materials. The value $t$ = 3.279 microns for the spot thickness for PMMA is also similar to the value obtained for SiO$_2$. Likewise, values of $\cos\phi_R$ = -0.998, $\cos\phi_G$ = 1.000, and $\cos\phi_B$ = -0.994; and $M_{cR}$ = 0.0009, $M_{cG}$ = 1.000, and $M_{cB}$ = 0.0028 are also similar to corresponding values obtained for SiO$_2$. FIG. 8 shows plots of the MTF values $M_{cR}$, $M_{cG}$, and $M_{cB}$ as functions of the filter thickness $t$ according to Eq. (1) for PMMA. Again similar to the case of SiO$_2$, the value of $M_{cG}$ has a peak value of one for $t$ near 3.28 microns whereas the curves for the red and the blue photosites are near zero at this value of $t$. Manufacturing tolerances are expected to be similar for PMMA and SiO$_2$.

Assuming that the solid-state imager has a photosite array pitch of $T$ = 9 microns and that the spacing between photosites with red filters is equal to the spacing between photosites with blue filters and is twice the photosite pitch of the array, that is $T_R = T_B = 2T$, then the Nyquist frequency for the red or blue can be found from Eq. (12) to be $F_{NR}$ = $F_{NB}$ = 0.0278 $\mu$m$^{-1}$. Substituting this value into Eq. (23) along with the values $b$ = 18 millimeters and $\lambda_B$ = 0.470 microns, yields $a$ = 0.235 millimeters = 235 microns for the mean spot diameter. This value of $a$ is independent of which material is selected to fabricate the transparent spot.

Fabrication of Wavelength-Selective
Optical Low-pass Filters

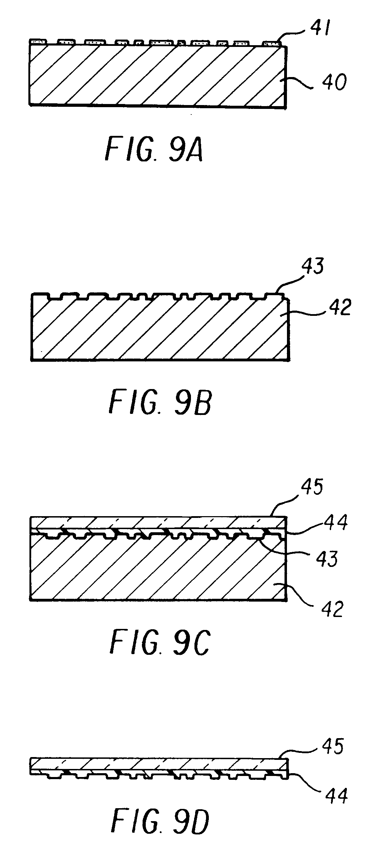

One method of fabricating the wavelength-selective phase-type optical low-pass antialiasing filter is by employing a suitable metal mold as is illustrated in FIGS. 9A-D. The metal mold is formed by first coating the surface of a metal blank 40 with photoresist or another suitable photopatternable material and exposing the photoresist to form a photoresist etch-mask 41 having a pattern that corresponds to the area other than the random transparent spots (FIG. 9A). Next the surface of the metal blank is subjected to an ion-milling process during which the photoresist etch-mask 41 causes the inverse of the random transparent spot pattern to be milled into the metal's surface. The depth of the resultant surface relief is made to be equal to the thickness of the randomly placed transparent spots plus any tooling factor, if applicable. After removal of the remaining photoresist, the metal mold 42 is coated with an appropriate release agent 43 if necessary (FIG. 9B). The mold is then used to replicate the random transparent spot pattern by stamping or molding the pattern in a transparent organic material 44 such as a polymer which has been softened by heat or an epoxy which has not yet been cured (FIG. 9C). Organic materials which could be used to form the transparent random spots include: polyacrylates or methacrylates; polycarbonates; polyesters; polyolefins; polystyrenes; polyimides; polyurethanes; polyethers; polyamides; or polysulphones. The molding process could be used to form the transparent spot pattern in a thin organic layer which is on top of a flat transparent glass substrate 45 (FIG. 9D) or, alternatively, to form a monolithic element having one surface flat and the random spot pattern on the opposing surface (not shown in FIG. 9).

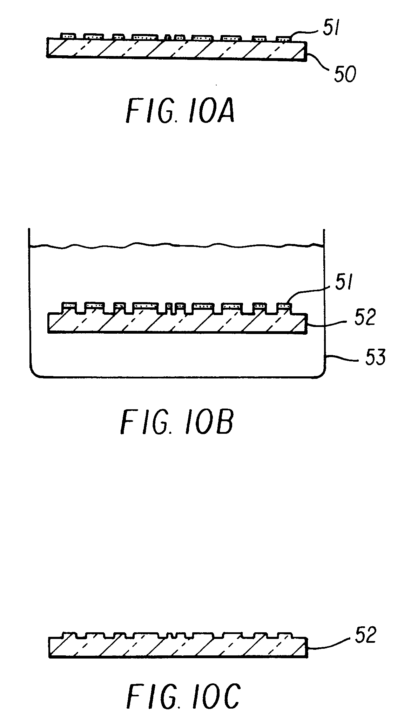

An alternative method of fabricating the wavelength-selective phase-type low-pass optical filter is by etching the pattern into a quartz plate as illustrated in FIGS. 10A-C. The first step includes coating a quartz wafer 50 with photoresist and patterning the photoresist to form a etch-mask 51, the pattern of which corresponds to the randomly placed transparent spots to be formed (FIG. 10A). The quartz wafer is then placed in an etch-bath 53 which is composed of a buffered oxide etch (FIG. 10B). The duration of the etch is timed so that the exposed quartz is etched to a depth that corresponds to the thickness of the randomly placed transparent spots. The photoresist is then removed leaving the finished wavelength-selective phase-type optical low-pass antialiasing filter 52 as shown in FIG. 10C.

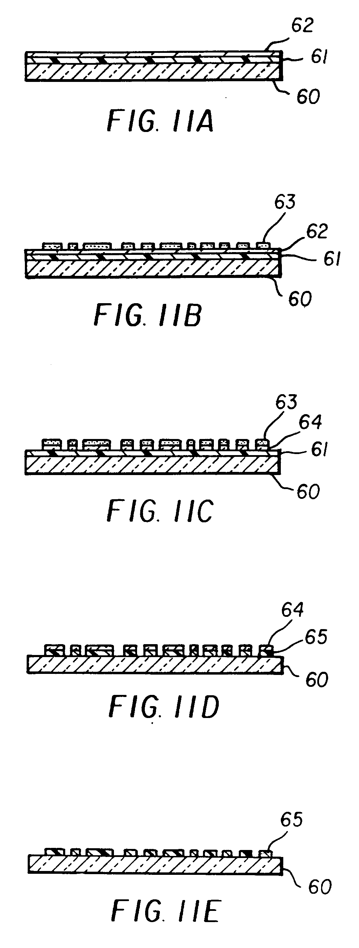

Yet another method for fabricating the wavelength-selective phase-type optical low-pass antialiasing filter is illustrated in FIGS. 11A-E. This technique involves coating a transparent glass substrate 60 with a layer of transparent organic polymer material 61 having a thickness that is equal to the thickness of the randomly placed transparent spots. Organic materials which could be used to form this layer include: polyacrylates or methacrylates; polycarbonates; polyesters; polyolefins; polystyrenes; polyimides; polyurethanes; polyethers; polyamides; or polysulphones. A thin inorganic etch-stop layer 62 is then coated on the transparent organic polymer layer 61 forming the structure shown in FIG. 11A. The inorganic etch-stop material could be silicon dioxide, silicon nitride, silicon, germanium, titanium, or organometallic glasses. Next a thin layer of photoresist is spin-coated on the thin inorganic etch-stop layer 62 and patterned to form a photoresist mask 63 which corresponds to the randomly placed transparent spots as shown in FIG. 11B. The photoresist mask pattern is then transferred to the thin inorganic etch-stop layer by wet or dry etching techniques to form the etch-stop mask 64 as shown in FIG. 11C. The next step involves an anisotropic oxygen plasma dry etch process which serves to transfer the random spot pattern to the transparent organic polymer layer 61 as shown in FIG. 11D. The thin etch-stop layer is removed using wet or dry etching techniques thereby forming the wavelength-selective optical low-pass filter 65 as shown in FIG. 11E.

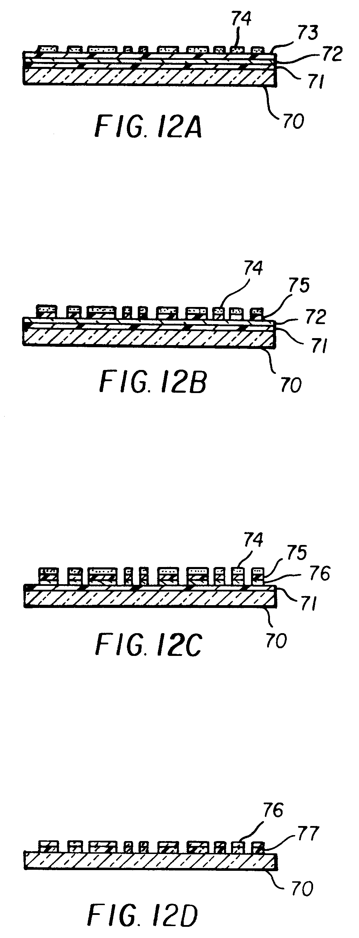

Yet another method for fabricating the wavelength-selective phase-type optical low-pass antialiasing filter is illustrated in FIGS. 12A-D. This method is similar to the one already described in FIGS. 11A-E. The main difference between these two methods is that the method illustrated in FIGS. 12A-D employs an inorganic material to form the transparent spots whereas an organic film is used to form the transparent spots in the method of FIGS. 11A-E. FIG. 12A shows a transparent glass substrate 70 coated with a first thin reactive ion etch (RIE) etch-stop layer 71. This thin RIE etch-stop layer has the property that it can withstand RIE processes that normally attack inorganic glasses (e.g., freon etches or the like) yet it can be removed without disturbing the layer that it is masking. Indium tin oxide (ITO), $SnO_2$, $In_2O_3$, or $Al_2O_3$ are examples of suitable RIE etch-stop materials and $CH_4$ (methane) removes the RIE etch-stop material without affecting the underlying glass. Layer 72 is a thick layer of deposited transparent inorganic glass that will eventually form the randomly placed transparent spots and is composed of chemical vapor deposited (CVD) silicon dioxide, spin on glass, or any other deposited transparent glass or inorganic material. Layer 73 is a second thin RIE etch-stop layer and layer 74 is a layer of photoresist that has been patterned according to the random transparent spot pattern. In FIG. 12B the photoresist pattern has been transferred to a second thin RIE etch-stop using methane as an etchant to form the second thin RIE etch-stop mask 75. FIG. 12C shows the result of using an anisotropic freon RIE etch to transfer the pattern of the second thin RIE etch-stop mask to the deposited glass layer to form the transparent random spots 76. FIG. 12D shows the completed device after removal of residual resist and the second thin RIE etch-stop mask. It will be appreciated that the presence of the first thin RIE etch-stop layer prevents the freon RIE etch from etching the glass substrate, thus making it easier to control precisely the thickness of the random transparent spots. Note that the methane etch removes the second thin RIE etch-stop mask 75 and at the same time etches that portion of the first thin etch-stop layer that is not protected by the random transparent spots. This results in the formation of a first thin RIE etch-stop mask 77 underlying each transparent spot. It will be appreciated that the total optical thickness of the combined transparent random spot 76 and the first thin etch-stop mask 75 must be equal to the desired optical thickness of the spot. However, it will be appreciated that the second thin RIE etch-stop mask 75 and the first thin RIE etch-stop layer 71 could be left in place on top of and below, respectively, the transparent spot and included as part of the filter. In this case no final methane etch would be required.

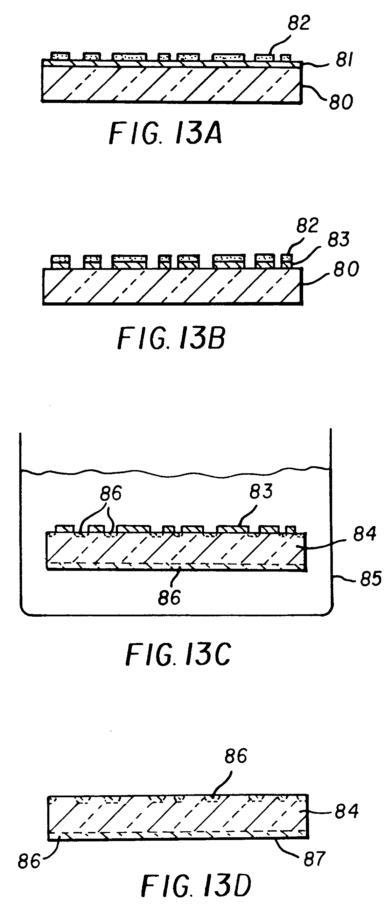

Still another method for fabricating the wavelength-selective phase-type optical low-pass antialiasing filter is illustrated in FIGS. 13A-D. This method relies on the so-called "ion-exchange" or "ion-diffusion" process to form the randomly placed transparent spots. This process involves submerging a glass substrate which contains one or more ionic species into a bath which contains one or more different ionic species. The ionic species in the glass in the regions immediately adjacent to the those areas of the surface of the glass which are in direct contact with the bath are exchanged with the ionic species in the bath in such a way that the index of refraction of the glass substrate is modified in regions where the ion exchange has taken place. An example of such a glass is Schott BK-7 glass which contains sodium ions. These sodium ions exchange with potassium or silver ions in molten $KNO_3$ or $AgNO_3$ baths, respectively, and these exchanged regions exhibit an index of refraction which is different from that of the glass in masked areas or in regions sufficiently far away from the surface. In FIG. 13A a thin ion-exchange masking layer 81 such as aluminum metal or aluminum oxide is deposited on the surface of a suitable transparent glass substrate 80. A photoresist mask 82 is then formed by first spin-coating a the thin layer of photoresist on the thin masking layer and patterning the photoresist according to the randomly placed transparent spots. The photoresist pattern is transferred using standard wet-etch techniques to the thin masking layer to form ion-exchange mask 83 as shown in FIG. 13B. After removal of the photoresist mask, the glass substrate is submerged in an appropriate molten salt bath 85 (see FIG. 13C). Ion-exchange occurs in those regions 86 where the molten salt bath comes into direct contact with an exposed surface of the glass substrate. After an appropriate period of time in the bath, which could vary from several minutes to several hours, the glass substrate is removed from the bath and the ion-exchange mask is removed to yield the wavelength-selective optical low-pass filter 87 as shown in FIG. 13D. The ion-exchanged regions 86 exhibit an index of refraction which differs from that of the bulk glass region 84. The ion-exchanged regions 86 form the transparent randomly placed spots.

The randomly placed transparent spots comprising the phase-type optical low-pass antialiasing filter could also be formed directly on one surface of one of the optical elements of the imaging lens system or any other optical element of the optical imaging system. This alternative embodiment of the present invention could be accomplished by means already described in connection with FIGS. 9A-D, 10A-C, 11A-E, and 12A-D whereby the transparent substrate in each case is replaced by the imaging lens element or any other optical element of the optical imaging system. As already mentioned in connection with these figures, the randomly placed transparent spots could be formed by a molding process, a wet-etching process, or by a process which involves deposition of a transparent material and subsequent anisotropic reactive ion-etching of this material through a suitable mask. Likewise the randomly placed transparent spot pattern could be formed on one surface of an optical element of the imaging lens system or any other optical element of the optical imaging system in a manner similar to that shown in FIGS.

13A-D where the transparent substrate is replaced by the optical element. In this case, ion-diffusion through a suitable mask results in areas on the surface of the optical element with modified index of refraction which correspond to the areas of the randomly placed transparent spots.

Other features of the invention are included below.

The invention wherein $\phi_\alpha$ corresponds to the phase difference in the green region of the visible spectrum; $\phi_\beta$ corresponds to the phase difference in the red region of the visible spectrum; and $\phi_\gamma$ corresponds to the phase difference in the blue region of the visible spectrum.

The invention wherein the optical filter is constructed such that the randomly placed transparent spots are either projections from, depressions in, or index of refraction variations in the region immediately adjacent to one surface of the transparent substrate and that the total area of the spots is equal or nearly equal to the area of the portion other than the spots.

The invention wherein the plurality of transparent spots are random in size with a mean diameter a satisfying the following relationship

$$a = F_{Ni}\lambda_i b$$

where $F_{Ni}$ is the Nyquist spatial frequency of the solid-state color imager at a specified wavelength $\lambda_i$ and $b$ is the separation distance between the filter and the image plane of the device.

The invention wherein the specified wavelength $\lambda_i$ is preferably in the blue region of the visible spectrum (i=B) but may also be in the red region of the visible spectrum (i=R).

The invention wherein the plurality of transparent spots are of arbitrary shape and oriented randomly.

The invention wherein the plurality of transparent spots are circular in shape.

The invention wherein the low-pass optical filter is located between the imaging lens and the image plane of the optical imaging system.

The invention wherein the low-pass optical filter is located at the entrance or exit pupil of the optical imaging system or between the lenses or groups of lenses that comprise the imaging lens system or directly in front of the imaging lens between the lens and the object.

The invention wherein the low-pass optical filter is an integral part of one surface of one element of the imaging lens system or any other optical element in the optical imaging system.

The invention wherein the integral low-pass optical filter is formed on or near one surface of one element of the optical imaging system by deposition or molding of material onto the surface, or etching into the surface to form a surface relief structure, or ion-diffusing ions into the surface to form an index gradient structure in the region immediately adjacent to the surface having the pattern of the randomly placed transparent spots.

The method wherein the transparent organic polymer is selected from the group consisting of: polyacrylates or methacrylates; polycarbonates; polyester; polyolefins; polystyrenes; polyimides; polyurethanes; polyethers; polyamides; and polysulphones.

A method of forming a wavelength-selective optical low-pass filter for use with an optical imaging system of a solid-state color imager, comprising the steps of:

a) coating a quartz wafer with photoresist and patterning the photoresist to form a mask so that the pattern corresponds to the randomly placed transparent spots to be formed;
b) wet etching the quartz wafer with a buffered oxide etch to a depth that is equal to the thickness of the randomly placed transparent spots; and
c) removing the photoresist mask to form the low-pass optical filter comprising a transparent substrate and a plurality of transparent spots randomly placed on the substrate.

## PARTS LIST

| | |
|---|---|
| 10 | transparent substrate |
| 11 | transparent spots with random diameter |
| 20 | transparent substrate |
| 21 | first transparent phase grating |
| 22 | second transparent phase grating |
| 30 | object to be imaged |
| 31 | lens system constituted by at least one lens |
| 32 | wavelength selective phase-type optical low-pass antialiasing filter |
| 33 | two-dimensional color filter array |
| 34 | image plane of the optical system |
| 35 | two-dimensional light-sensing photosite array which constitutes the solid-state image pickup device |
| 36 | optical axis |
| 40 | metal blank |
| 41 | photoresist etch-mask |
| 42 | metal mold |
| 43 | release agent |
| 44 | transparent organic polymer material |
| 45 | flat transparent glass substrate |
| 50 | quartz wafer |
| 51 | etch-mask |
| 52 | wavelength-selective phase-type optical low-pass antialiasing filter |
| 53 | etch-bath |
| 60 | transparent glass substrate |
| 61 | transparent organic polymer layer |
| 62 | thin inorganic etch-stop layer |
| 63 | photoresist mask |
| 64 | etch-stop mask |
| 65 | transparent random spots of wavelength-selective optical low-pass filter |
| 70 | transparent glass substrate |
| 71 | first thin RIE etch-stop layer |
| 72 | thick layer of deposited transparent inorganic glass |
| 73 | second thin RIE etch-stop layer |
| 74 | patterned photoresist layer |
| 75 | second thin RIE etch-stop mask |
| 76 | transparent random spots |
| 77 | first thin RIE etch-stop mask |
| 80 | transparent glass substrate |
| 81 | thin ion-exchange masking layer |
| 82 | photoresist mask |
| 83 | ion-exchange mask |
| 84 | bulk glass region |
| 85 | molten salt bath |
| 86 | ion-exchange regions |
| 87 | wavelength-selective optical low-pass filter |

## Claims

1. A wavelength-selective optical low-pass filter for use with an optical imaging system of a solid-state color imager, comprising a transparent substrate and a plurality of transparent spots randomly placed on the substrate for producing a phase difference between a wavefront transmitted through the spots and that portion of the substrate other than the spots to define a filter having a spatial sampling cut-off frequency which varies depending on wavelength of light, the phase difference satisfying the following conditions

$$\cos\phi_\alpha = 1$$

$$-1.0 \leq \cos\phi_\beta \leq -0.4$$

$$-1.0 \leq \cos\phi_\gamma \leq -0.4$$

where $\phi_\alpha$, $\phi_\beta$, and $\phi_\gamma$ are the phase differences due to the spots at certain specific wavelengths in the visible through infrared portion of the optical spectrum, and are given by the following relationship

$$\phi_i = 2\pi \frac{n_i - n_i'}{\lambda_i} t$$

where $i = \alpha$, $\beta$, or $\gamma$; $n_i$ is the index of refraction of the material comprising the spots at the specific wavelength $\lambda_i$; $n_i'$ is the index of refraction of the medium surrounding the spots at the specific wavelength $\lambda_i$; and $t$ is the physical thickness of the spots.

2. A method of forming a wavelength-selective optical low-pass filter for use with an optical imaging system of a solid-state color imager, comprising the steps of:

a) preparing a mold having on its surface a relief pattern which is the inverse of the randomly placed transparent spots, the depth of the relief being equal to the thickness of the randomly placed transparent spots plus any tooling factor, if applicable; and

b) using the mold to stamp, extrude, or otherwise form replicates in an organic polymer of the low-pass optical filter comprising a transparent substrate and a plurality of transparent spots randomly placed on the substrate.

3. A method of forming a wavelength-selective optical low-pass filter for use with an optical imaging system of a solid-state color imager, comprising the steps of:

a) coating a transparent glass wafer with a layer of transparent organic polymer material having a thickness that is equal to the thickness of the randomly placed transparent spots;

b) forming a thin etch-stop layer on the transparent organic polymer layer;

c) coating a thin layer of photoresist to form a mask on the thin etch-stop layer and patterning the photoresist so that the pattern corresponds to the randomly placed transparent spots to be formed;

d) transferring the mask pattern of the randomly placed transparent spots in the photoresist to the thin etch-stop layer by wet or dry etching techniques;

e) anisotropically dry etching (*e.g.,* using oxygen reactive ion or plasma) transparent organic polymer layer according to the thin etch-stop mask pattern; and

f) removing the thin etch-stop layer using wet or dry etching techniques thereby forming the low-pass optical filter comprising a transparent substrate and a plurality of transparent spots randomly placed on the substrate.

4. The method of claim 15 wherein the transparent organic polymer is selected from the group consisting of: polyacrylates or methacrylates; polycarbonates; polyester; polyolefins; polystyrenes; polyimides; polyurethanes; polyethers; polyamides; polysulphones; and evaporated or spun-on low molecular weight organic glasses.

5. The method of claim 15 wherein the thin etch-stop is an inorganic material such as silicon dioxide, silicon nitride, silicon, germanium, titanium, or organometallic glasses.

6. The method of claim 17 wherein the etch-stop layers are deposited by RF sputtering, thermal evaporation, plasma-enhanced chemical vapor deposition, or spin-on glass techniques.

7. A method of forming a wavelength-selective optical low-pass filter for use with an optical imaging system of a solid-state color imager, comprising the steps of:

a) providing a first thin RIE etch-stop layer on a transparent glass substrate;

b) coating a thick layer of transparent glass on the first thin RIE etch-stop layer, the thick deposited transparent glass layer having an optical thickness that is equal to the optical thickness of the randomly placed transparent spots less the optical thickness of the first thin RIE etch-stop layer, the optical thickness being defined as the index of refraction of a layer times the physical thickness of the layer;

c) providing a second thin RIE etch-stop layer on the thick layer of deposited transparent glass and patterning a thin photoresist mask on the second thin RIE etch-stop layer so that the pattern corresponds to the randomly placed transparent spots to be formed;

d) transferring by methane etching the pattern of the randomly placed transparent spots in the photoresist mask to the second thin RIE etch-stop layer;

e) anisotropically dry etching (*e.g.,* using a freon reactive ion or plasma etch) thick deposited transparent glass layer according to the second thin RIE etch-stop mask pattern;

f) removing the remaining portions of the photoresist mask; and

g) removing by methane etching the exposed portions of the first and the second thin etch-stop layers.

8. The method of claim 19 wherein the thick deposited transparent glass layer is silicon dioxide or some other inorganic glass and is coated by chemical vapor deposition, spin on glass techniques, or some other similar method.

9. The method of claim 19 wherein the thin RIE etch-stop layer is an inorganic material such as indium tin oxide (ITO), $SnO_2$, $In_2O_3$, or $Al_2O_3$.

10. The method of claim 21 wherein the first and second RIE etch-stop layers are deposited by RF sputtering, thermal evaporation, or plasma enhanced chemical vapor deposition.

11. A method of forming a wavelength-selective optical low-pass filter for use with an optical imaging system of a solid-state color imager, comprising the steps of:

a) providing a thin ion-exchange masking layer on a suitable transparent glass substrate the glass substrate containing one or more ionic species which can be exchanged and patterning a thin photoresist mask on the thin ion-exchange masking layer so that the pattern corresponds to the randomly placed transparent spots to be formed;

b) transferring by wet etching the pattern of the randomly placed transparent spots in the photoresist mask to the thin ion-exchange masking layer to form the ion-exchange mask;

c) removing the photoresist mask pattern and submerging the masked transparent glass substrate into a bath containing molten salts of one or more ionic species which are different from the ionic species present in the masked transparent glass substrate; and

d) removing the masked transparent glass substrate from the bath after a period of time which permits exchange of the ionic species in the bath and the ionic species present in the masked transparent glass substrate in those regions where the surface of the transparent glass substrate comes into direct contact with said bath and removing said ion-exchange mask.

FIG. IA

FIG. IB

FIG. IC

FIG. 2

EP 0 759 573 A2

FIG. 3

FIG. 4

FIG. 5

FIG.6

FIG. 7

FIG. 8

_FIG. 9A_

_FIG. 9B_

_FIG. 9C_

_FIG. 9D_

FIG. 10A

FIG. 10B

FIG. 10C

FIG. 11A

FIG. 11B

FIG. 11C

FIG. 11D

FIG. 11E

FIG. 12A

FIG. 12B

FIG. 12C

FIG. 12D

23

FIG. 13A

FIG. 13B

FIG. 13C

FIG. 13D